# EUROPEAN PATENT APPLICATION

(11) **EP 2 713 297 A1**
(43) Date of publication of application: **02.04.2014**
(21) Application number: 12789774.2
(22) Date of filing: 18.05.2012
(51) Int. Cl.: G06F 21/24, G06F 21/22, G09C 1/00, H04L 9/08, H04L 9/32, H04N 7/173

(54) **BROADCAST/COMMUNICATION LINKING RECEIVER APPARATUS AND RESOURCE MANAGING APPARATUS**

(30) Priority: 20.05.2011 JP 2011114075
(71) Applicant: Nippon Hoso Kyokai, Tokyo 150-8001 (JP)
(72) Inventor: OHTAKE Go, Tokyo 157-8510 (JP); OGAWA Kazuto, Tokyo 157-8510 (JP)
(74) Representative: Tomlinson, Kerry John
(86) International application number: PCT/JP2012/062809
(87) International publication number: WO 2012/161122

(57) **Abstract**

An integrated broadcasting communications receiver, comprises: an application activation information extracting unit; an application obtaining unit; an application execution unit; an application controlling unit; a revocation list extracting unit and a verification key extracting unit for extracting a revocation list and a verification key from broadcast data; a revocation list verifying unit for verifying if a provider ID of an application is written in a revocation list; and a resource managing unit for obtaining a resource.

## Description

### Technical Field

The present invention relates to an integrated broadcasting communications receiver and a resource managing device that enable using services for which broadcasting and communication are integrated with each other. The present application claims the priority of Japanese Patent Application No. 2011-114075 filed on May 20, 2011 in Japan, the contents of which are incorporated herein by reference.

### Background Art

In recent years, accompanying the digitalization of broadcast and the high speed and broadband of communication, various services for which broadcasting and communication are integrated with each other (hereinafter, this kind of service will be referred to as "an integrated broadcasting communications service") are discussed. In such an integrated broadcasting communications service, it is assumed that various information related to the contents of a broadcast program or the like is obtained via a communication line and is presented in combination with broadcast. Further, in order to enjoy such services, applications which are applicable to such services are used on a receiving terminal (hereinafter, referred to as an integrated broadcasting communications receiver). Herein, "application" refers to software that has functions to present the program related information obtained via the communication line in combination with the contents of a broadcast program or the like, and operates on the integrated broadcasting communications receiver.

In order to realize more attractive services for viewers, an environment where not only applications produced by broadcast stations but also applications produced by various providers are provided to the viewers is necessary.
On the other hand, in order that viewers can use a provided application at ease, it is necessary to confirm the service provider who produces the application, and also perform "application authentication" to prevent falsification of the application.

In general, application authentication is performed as follows. In response to a request by a user (viewer), a service provider transmits an application via a communication line to the integrated broadcasting communications receiver of the viewer. In this situation, the service provider uses a signing key held by the service provider in order to add a digital signature to the application and transmits the application. The integrated broadcasting communications receiver of the user verifies the signature added to the received application, using a verification key.

Incidentally, this procedure is applied in a case that a service provider directly transmits an application to the integrated broadcasting communications receiver of a user. However, a model is also possible in which a service provider registers an application, the application having been produced by the service provider, on an application server operated by a third party other than the service provider, and the service provider transmits the application from the application server to the integrated broadcasting communications receiver, in response to a request by the user. That is, in case a service provider uses an application server operated by a third party, the service provider adds a digital signature to the application in registering an application, using a signing key, and transmits the application to the application server. On the other hand, the application server verifies the signature added to the received application, using a verification key. In general, PKI (Public Key Infrastructure) is used for authentication using such a digital signature (see Non-Patent Literature 1).

### Related Art Document

### Non-Patent Literature

Non-Patent Literature 1: Information Security Technology Laboratory, "Technical Explanation of PKI", [online]. July 3, 2007, Information-technology Production Agency, Japan [searched on May 20, 2011], Internet <URL: http://www.ipa.go.jp/security/pki/>

### Disclosure of the Invention

### Problems to be Solved by the Invention

In integrated broadcasting communications services, when a service provider who produces an application that performs fraudulent operation exists, it is necessary to revoke a signature added by the service provider or a signing key held by the service provider, and to prohibit the application, which is executed by an integrated broadcasting communications receiver, from accessing a resource (resource API server) managed by a broadcast station. Herein, a resource managed by a broadcast station refers to, for example, data, such as metadata or icons, or contents used by an application in execution. However, for the above-described PKI, restricting an application from accessing a resource managed by a broadcast station has not been considered.

The present invention has been developed to solve the above-described problems, and an object of the invention is to provide an integrated broadcasting communications receiver and a resource managing device which are capable of invalidating an application that performs fraudulent operation in an integrated broadcasting communications service, and restricting the application from accessing a resource managed by a broadcast station.

### Means for Solving the Problems

In order to solve the above-described problems, an integrated broadcasting communications receiver of claim 1 is used for an integrated broadcasting communications system including: a key generating device for generating a verification key that is public information for verifying a signature added to an application of a corresponding individual service provider; a signing key generating device for generating a signing key that is unique to the service provider, and generating a revocation list in which a provider ID of a service provider corresponding to a revoked signing key is described; an application server that adds a signature to an application by a signing key and delivers the application to an integrated broadcasting communications receiver; a resource managing device for managing a resource that the application uses during execution; and a broadcast transmitting apparatus for transmitting broadcast data via a broadcast wave to the integrated broadcasting communications receiver, wherein the integrated broadcasting communications receiver is configured to include an application activation information extracting unit, an application obtaining, an application execution unit, an application controlling unit, a revocation list extracting unit, a verification key extracting unit, a revocation list verifying unit, a signature verifying unit, and a resource managing unit.

With this configuration, by the application activation information extracting unit, the integrated broadcasting communications receiver extracts the application activation information for obtaining and controlling the application from the event information table included in the transport stream of the broadcast data transmitted by the broadcast transmitting apparatus. Further, by the application obtaining unit and with reference to the address of the application server described in the application activation information, the integrated broadcasting communications receiver obtains the application from the application server, and executes the application by the application execution unit. Further, by the application controlling unit, the integrated broadcasting communications receiver controls the activation state of the application executed by the application execution unit, according to the control code described in the application activation information.

By the revocation list extracting unit and the verification key extracting unit, the integrated broadcasting communications receiver extracts the revocation list and the verification key from the predetermined module of the DSM-CC data carousel transmitted by the broadcast transmitting apparatus.
Further, by the revocation list verifying unit, the integrated broadcasting communications receiver verifies whether or not the provider ID of the service provider who provides the application obtained by the application obtaining unit is described in the revocation list. Still further, by the signature verifying unit, the integrated broadcasting communications receiver verifies whether or not a signature is added to the application with the provider ID having been determined by the revocation list verifying unit to be not described in the revocation list, and verifies whether or not the signature is valid. Yet further, by the resource managing unit, the integrated broadcasting communications receiver obtains the resource from the resource managing device when the application, whose signature has been determined to be valid by the signature verifying unit, needs the resource, and allocates the resource to the application execution unit, and the application execution unit executes the application, using the allocated resource.

Further, in order to solve the above-described problems, a resource managing device of claim 2 is used for an integrated broadcasting communications system including: a key generating device for generating a verification key that is public information for verifying a signature added to an application of a corresponding individual service provider; a signing key generating device for generating a signing key that is unique to the service provider, and generating a revocation list in which a provider ID of a service provider corresponding to a revoked signing key is described; an application server that adds a signature to an application by a signing key and delivers the application to an integrated broadcasting communications receiver; a resource managing device for managing a resource that the application uses during execution; and a broadcast transmitting apparatus for transmitting broadcast data via a broadcast wave to the integrated broadcasting communications receiver, wherein the resource managing device is configured to include a resource storing unit, a revocation list determining unit, and a resource output unit.

With this configuration, the resource managing device stores the resource by the resource storing unit, and determines whether or not the provider ID of the service provider who provides the application that needs the resource is described in the revocation list by the revocation list determining unit. In case that the revocation list determining unit has determined that the provide ID is not described in the revocation list, the resource managing device outputs the resource to the integrated broadcasting communications receiver that executes the application having the provider ID.

### Advantages of the Invention

According to the invention related to claim 1, as it is possible by the revocation list verifying unit to verify whether or not a provider ID corresponding to an application is described, it is possible to arbitrarily revoke an application that performs, for example, fraudulent operation. Further, according to the invention related to claim 1, by verifying the signatures of applications by the signature verifying unit, applications (general application) whose operation on an integrated broadcasting communications receiver is not guaranteed can be determined. Thus, it is possible to restrict these applications from accessing resources managed by a broadcast station.

According to the invention related to claim 2, it is possible to restrict an application executed on an integrated broadcasting communications receiver from obtaining a resource managed by a broadcast station, according to a revocation list.

### Brief Description of the Drawings

FIG. 1 is a diagram of system configuration showing the configuration of an integrated broadcasting communications system according to an embodiment of the present invention;
FIG. 2 is a diagram of function blocks showing the configurations of a resource managing device, a key generating device, and a signing key generating device according to the embodiment of the present invention;
FIG. 3 is a diagram of function blocks showing the configuration of an application server according to the embodiment of the present invention;
FIG. 4 is a diagram of function blocks showing the configuration of an integrated broadcasting communications receiver according to the embodiment of the present invention;
FIG. 5 is a flowchart showing the operation of the integrated broadcasting communications receiver according to the embodiment of the present invention; and
FIG. 6 is a diagram of system configuration showing the configuration of an integrated broadcasting communications system according to another embodiment of the present invention.

### Embodiments for Carrying Out the Invention

Embodiments according to the present invention will be described below, referring to the drawings.
Incidentally, the same names and the same symbols will be assigned to the respective same elements in the following description, and overlapping description will be omitted.

### [Configuration of Integrated Broadcasting Communications System]

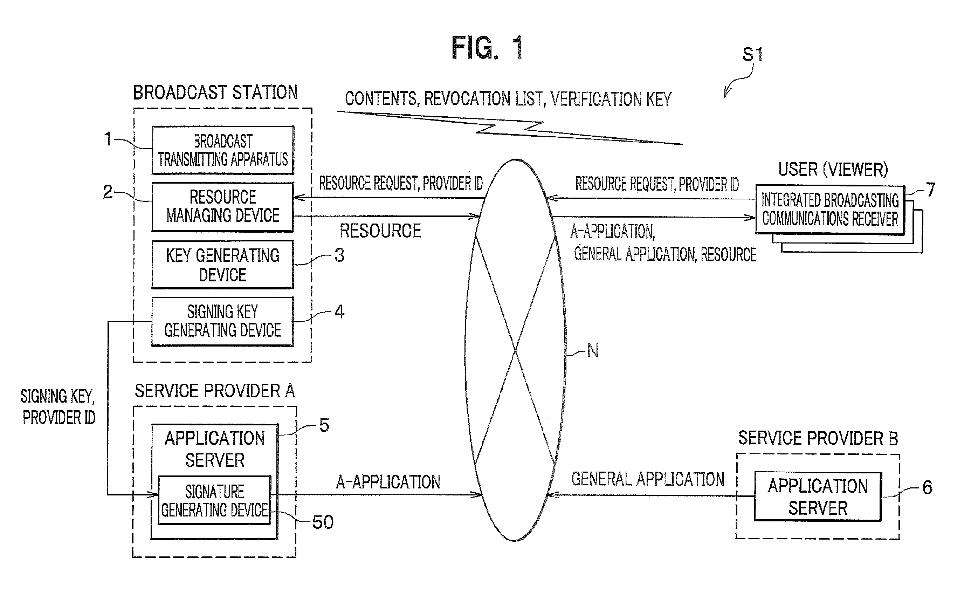

First, the configuration of an integrated broadcasting communications system S1 will be described, referring to FIG. 1. The integrated broadcasting communications system S1 provides an integrated broadcasting communications service to a user via an integrated broadcasting communications receiver 7. Herein, as shown in FIG. 1, the integrated broadcasting communications system S1 includes a broadcast transmitting apparatus 1 provided in a broadcast station, a resource managing device 2, a key generating device 3, a signing key generating device 4, an application server 5 provided in a service provider A, an application server 6 provided in a service provider B, and an integrated broadcasting communications receiver 7 provided in a user's house (or carried by a user).

As shown in FIG. 1, the broadcast transmitting apparatus 1, the resource managing device 2, the key generating device 3, and signing key generating device 4; the application server 5; the application server 6; and the integrated broadcasting communications receiver 7 are connected with each other via a communication line N (Internet, external network). Further, though not shown, the broadcast transmitting apparatus 1, the resource managing device 2, the key generating device 3, and the signing key generating device 4 are connected with each other via a dedicated communication line (internal network) of the broadcast station. Incidentally, herein, although the application servers 5, 6 are shown in one unit for each for brevity of description, it is needless to say that these are connected in respective plural numbers to the communication line N.

As shown in FIG. 1, the integrated broadcasting communications system S1 provides contents and applications related to the contents to the integrated broadcasting communications receiver 7 used by the user. The integrated broadcasting communications system S1 provides an application having been subjected to application authentication by the use of an ID-based signature scheme, as described later, to the integrated broadcasting communications receiver 7 as an A application, and provides an application having not been subjected to application authentication to the integrated broadcasting communications receiver 7 as a general application.

The broadcast transmitting apparatus 1 transmits broadcast data including contents, such as a broadcast program and the like, via broadcast wave W to the integrated broadcasting communications receiver 7. Further, as shown in FIG. 1, the broadcast transmitting apparatus 1 transmits a revocation list generated by the signing key generating device 4 and a verification key generated by the key generating device 3 together with contents to the integrated broadcasting communications receiver 7, having these included in the broadcast data. Herein, a revocation list refers to a list in which a provider ID of a service provider A corresponding to a revoked signing key is described.

Concretely, the broadcast transmitting apparatus 1 transmits the above-described revocation list and verification key to the integrated broadcasting communications receiver 7, having them stored in a predetermined module of a DSM-CC data carousel. In this situation, the broadcast transmitting apparatus 1 preferably transmits them, fixing the component tag and the module of a carousel for transmission of the revocation list and the verification key. Thus, the integrated broadcasting communications receiver 7 can easily and surely extract the revocation list and the verification key from the DSM-CC data carousel, based on a component tag and a module ID that have been determined in advance.

Further, the broadcast transmitting apparatus 1 provides application activation information to the integrated broadcasting communications receiver 7.
Herein, application activation information refers to data including information for specifying an application, such as the identifier (ID) of the application and the location (address) of the application and additional information for controlling the application.

Concretely, the broadcast transmitting apparatus 1 describes the application activation information in the p/f area in EIT (Event Information Table) in SI (Service Information) table included in TS (Transport Stream) of an MPEG-2, the TS being the broadcast data, and thus transmits the application activation information to the integrated broadcasting communications receiver 7. Incidentally, EIT refers to a table in which program titles, program contents, performers, program genre, etc. are described, and the p/f area refers to an area, in the EIT, in which the program (content) in the present broadcast and the program followingly (next) scheduled for broadcasting are described. Thus, by the integrated broadcasting communications receiver 7, it is possible to easily obtain and control applications that are used by the contents of the present broadcast and the contents of the followingly scheduled broadcast..

Herein, the cycle of transmitting a revocation list to the integrated broadcasting communications receiver 7 by the broadcast transmitting apparatus 1 may be, for example, once a week, or a revocation list may be transmitted each time a provider ID described in a revocation list is updated.

The resource managing device (resource providing device) 2 manages (stores) resources used by applications that are executed by the integrated broadcasting communications receiver 7, and provides these resources to the integrated broadcasting communications receiver 7. The concrete configuration of the resource managing device 2 will be described later.

The key generating device 3 generates a master key for generating a signing key and a verification key for verifying a signature, and manages (stores) them. Incidentally, a verification key generated by the key generating device 3 is assumed to be delivered to the integrated broadcasting communications receiver 7, for example, via broadcast wave W. The concrete configuration of the key generating device 3 will be described later.

The signing key generating device 4 generates signing keys used in adding a signature to an application, and generates a revocation list in which the provider IDs of service providers A corresponding to respective revoked signing keys are described. Incidentally, it is assumed that a signing key generated by the signing key generating device 4 is delivered to a service provider A (application server 5) off-line, taking into account leakage or the like. The concrete configuration of the signing key generating device 4 will be described later.

The application server 5 provides applications-A to the integrated broadcasting communications receiver 7.
Herein, an A (Authorized) application refers to an application to which a signature has been added by an ID-based signature scheme, in other words, an application of which provider has been confirmed by the broadcast station. Incidentally, an ID-based signature refers to an digital signature by which an arbitrary character string (herein, the provider ID of an application) can be made a public key. Concretely, the method described in the document ("Identity-Based Cryptosystems and Signature Schemes", Proc. of CRYPTO'84. LNCS 196, pp. 47-53, Springer-Verlag, 1984) can be used.

The operation of an A application on the integrated broadcasting communications system S1 is guaranteed, and the A application can use resources managed by the broadcast station, as described later. An example of an A application is, for example, an application used in a broadcast program provided by the broadcast station. Therefore, herein as shown in FIG. 1, the application server 5 is provided with a signature generating device 50 that adds a signature to an application and thus transmits the application. The concrete configuration of the signature generating device 50 will be described later.

The application server 6 provides general applications to the integrated broadcasting communications receiver 7. Herein, a general application (or a non-authorized application) refers to an application to which a signature is not added, in other words, an application of which provider has not been confirmed by the broadcast station.

The operation of a general application on the integrated broadcasting communications system S1 is not guaranteed, and the general application cannot use resources managed by the broadcast station, as described later. An example of a general application is a clock application that informs a time on a television screen, or a stock price application that informs stock prices, wherein these applications are produced independently by third parties (service providers B) who do not have relation with the broadcast station. Accordingly, the application server 6 transmits an application to the integrated broadcasting communications receiver 7 without adding a signature to the application, as shown in FIG. 1.

The integrated broadcasting communications receiver 7 receives broadcast data including content of a broadcast program or the like, a revocation list, and a verification key via broadcast wave W from the broadcast transmitting apparatus 1. Further, the integrated broadcasting communications receiver 7 receives an A application from the application server 5, verifies (authenticates) the signature added to the application by a verification key, and also receives a general application from the application server 6. The integrated broadcasting communications receiver 7 is, for example, a television receiver, a personal computer, or the like that enables enjoying integrated broadcasting communications services. The concrete configuration of the integrated broadcasting communications receiver 7 will be described later.

### (Configuration of Resource Managing Device)

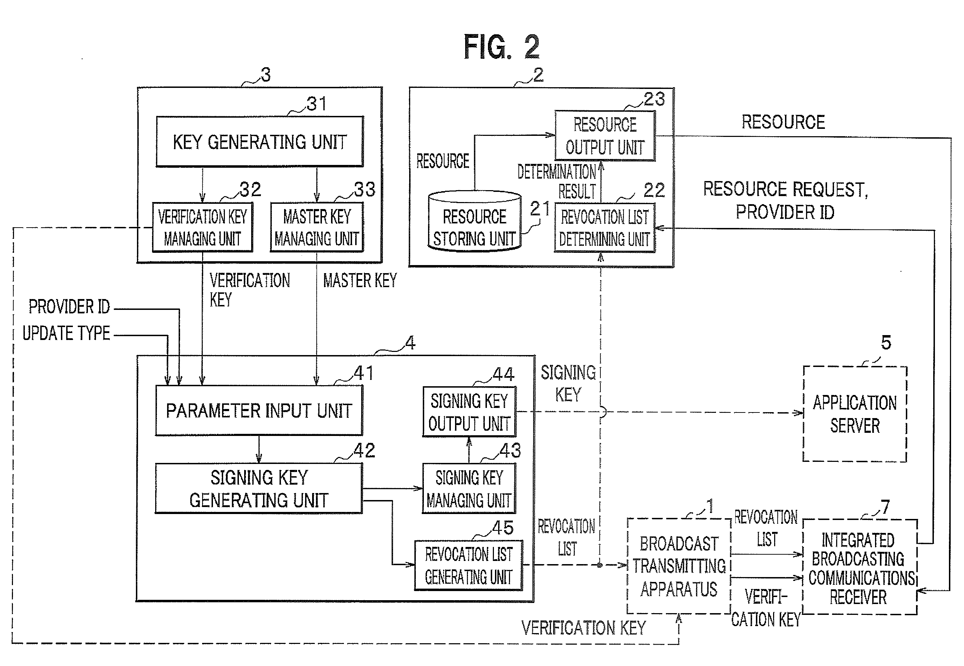

The resource managing device 2 is herein, as shown in FIG. 2, provided with a resource storing unit 21, a revocation list determining unit 22, and a resource output unit 23.

The resource storing unit 21 stores resources (metadata, data such as icons, contents, etc.) used by an application executed on the integrated broadcasting communications receiver 7. The resource storing unit 21 stores in advance resources used by an A application, as shown in FIG. 2, and is configured to be able to output the resources to the resource output unit 23. Incidentally, the resource storing unit 21 is concretely embodied as a memory, a hard disk, or the like, which are capable of storing data.

The revocation list determining unit 22 determines whether or not a provider ID corresponding to an application that requests a resource is described in a revocation list.
As shown in FIG. 2, a revocation list is input to the revocation list determining unit 22 from a revocation list generating unit 45 of the signing key generating device 4. Upon input of a resource request and the provider ID of an application that uses the resource, from the integrated broadcasting communications receiver 7, as shown in FIG. 2, the revocation list determining unit 22 determines whether or not the provider ID is described in the revocation list, and outputs a determination result to the resource output unit 23.

The resource output unit 23 outputs a resource to the integrated broadcasting communications receiver 7. Concretely, as shown in FIG. 2, when a determination result "The provider ID is not described in the revocation list." is input from the revocation list determining unit 22, the resource output unit 23 reads out a resource used by the application concerned from the resource storing unit 21, and outputs the resource to the integrated broadcasting communications receiver 7. On the other hand, when a determination result "The provider ID is described in the revocation list.) is input to the revocation list determining unit 22, as shown in FIG. 2, the resource output unit 23 does not read out a resource used by the application concerned from the resource storing unit 21. Thus, according to the revocation list, the resource managing device 2 can restrict an application executed by the integrated broadcasting communications receiver 7 from obtaining resources managed by the broadcast station.

### (Configuration of Key generating device)

The key generating device 3 is provided with a key generating unit 31, a verification key managing unit 32, and a master key managing unit 33, as shown in FIG. 2. Incidentally, it is assumed that the key generating device 3 and the signing key generating device 4 are communicably connected by a communication interface not shown.

The key generating unit 31 generates a master key and a verification key. The key generating unit 31 generates herein a master key and a verification key, according to the ID-based signature scheme. Then, the key generating unit 31 outputs the generated verification key to the verification key managing unit 32 and outputs the generated master key to master key managing unit 33.

The verification key managing unit 32 stores and manages the verification key generated by the key generating unit 31. Concretely, the verification key managing unit 32 writes the verification key generated by the key generating unit 31 into a storage medium not shown, and reads out the verification key in response to a request. Further, the verification key managing unit 32 reads out the verification key from the storage medium upon instruction by an operator in delivering the verification key to the integrated broadcasting communications receiver 7. The verification key read in such a manner is delivered to the integrated broadcasting communications receiver 7, for example, from the broadcast transmitting apparatus 1 via broadcast wave W, using the above-described DSM-CC data carousel. However, the verification key managing unit 32 may also deliver the verification key to the integrated broadcasting communications receiver 7 off-line, for example, writing the verification key in an smart card or the like.

The master key managing unit 33 stores and manages the master key generated by the key generating unit 31. Concretely, the master key managing unit 33 writes the master key generated by the key generating unit 31 into the storage medium, not shown, and reads out the master key in response to a request.

### (Configuration of Signing key Generating Device)

As shown in FIG. 2, the signing key generating device 4 is herein provided with a parameter input unit 41, a signing key generating unit 42, a signing key managing unit 43, a signing key output unit 44, and a revocation list generating unit 45.

The parameter input unit 41 is used to input various parameters for generating a signing key and a revocation list. To the parameter input unit 41, an update type and a provider ID (service provider identifier) are input from an input unit, not shown herein, and a master key and a verification key are input from the key generating device 3, as shown in FIG. 2.

Herein, the update type is type information representing an instruction to issue a signing key, or an instruction of content of process of invalidating a signing key. For example, as described in the following Table 1, issuance of a signing key and invalidation of a signing key as processing contents are allocated to the values of the update types.

**[Table 1]**

| Update Type | Processing Content |
|---|---|
| 1 | Issue Signing key |
| 2 | Revoke Signing key |

A provider ID is an identifier that is predetermined to uniquely identify a service provider. Such provider IDs are serial numbers starting with a predetermined number (for example, "1"). In case of newly registering a service provider, the provider ID of this service provider is set to a value obtained by adding "1" to the maximum value of existing provider IDs. The parameter input unit 41 outputs, as shown in FIG. 2, an update type, a provider ID, a master key and a verification key, which have been input, to the signing key generating unit 42.

The signing key generating unit 42 generates a signing key, according to the ID-based signature scheme, based on the update type, the provider ID, the master key and the verification key having been input by the parameter input unit 41. If the update type is "1 (issuance of a signing key)", the signing key generating unit 42 outputs a generated signing key to the signing key managing unit 43. If the update type is "2 (invalidation of a signing key)", the signing key generating unit 42 outputs an provider ID (a provider ID that is intended to revoke) having been input, to the revocation list generating unit 45 without generating a signing key.

The signing key managing unit 43 stores and manages the signing key generated by the signing key generating unit 42. The signing key managing unit 43 concretely outputs the signing key generated by the signing key generating unit 42 and the provider ID to the signing key output unit 44, writes them into the storage medium, not shown, and reads out in response to a request.

The signing key output unit 44 transmits the signing key and the provider ID to the application server 5, based on instruction by the signing key managing unit 43.

The revocation list generating unit 45 generates a revocation list which specifies a signing key that is intended to revoke. If the above-described update type is "2 (invalidation of a signing key)" herein, the revocation list generating unit 45 respectively describes, in the revocation list, provider IDs that are intended to be revoke. Then, the revocation list generating unit 45, as shown in FIG. 2, outputs the generated revocation list to the broadcast transmitting apparatus 1 and the revocation list determining unit 22 of the resource managing device 2.

### (Configuration of Signing key Generation Device)

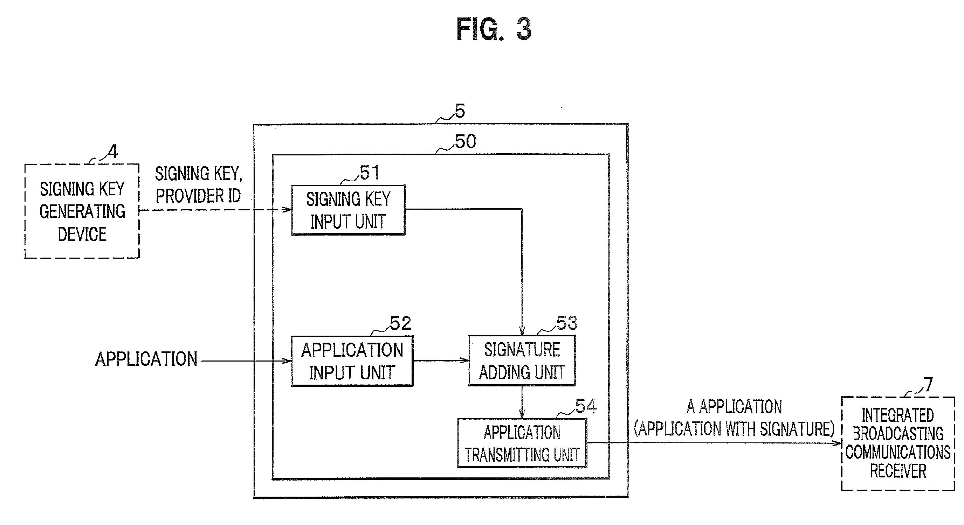

The signature generating device 50 adds a signature to an application, using a signing key generated by the signing key generating device 4. As shown in FIG. 3, the signature generating device 50 is herein provided with a signing key input unit 51, an application input unit 52, a signature adding unit 53, and an application transmitting unit 54.

The signing key input unit 51 is used to input a signing key generated by the signing key generating device 4. The signing key input unit 51 outputs the input signing key to the signature adding unit 53, as shown in FIG. 3.

The application input unit 52 is used to input an application from outside. The application input unit 52 may be, for example, one that receives an application via a network inside a service provider, and may be one that reads out an application written in a storage medium. The application input unit 52 outputs the input application to the signature adding unit 53, as shown in FIG. 3.

The signature adding unit 53 adds a digital signature (ID-based signature) to the application input via the application input unit 52, using the signing key. Then, the signature adding unit 53 outputs the application with the added signature to the application transmitting unit 54, as shown in FIG. 3.

The application transmitting unit 54 transmits the A application (application with signature), to which the signature has been added by the signature adding unit 53, to the integrated broadcasting communications receiver 7 via the communication line N.

### (Configuration of Integrated Broadcasting Communications Receiver)

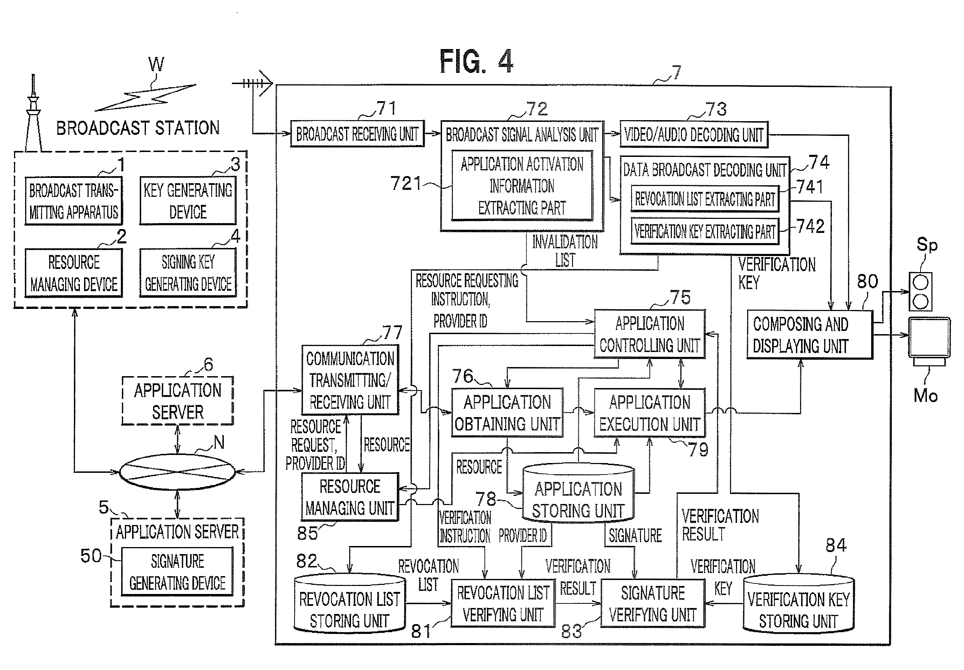

In the following, the configuration of the integrated broadcasting communications receiver 7 will be described in detail, referring to FIG. 4 (and FIG. 1, as appropriate). As shown in FIG. 4, the integrated broadcasting communications receiver 7 is provided with a broadcast receiving unit 71, a broadcast signal analysis unit 72, a video/audio decoding unit 73, a data broadcast decoding unit 74, an application controlling unit 75, an application obtaining unit 76, a communication transmitting/receiving unit 77, an application storing unit 78, an application execution unit 79, a composing and displaying unit 80, revocation list verifying unit 81, revocation list storing unit 82, signature verifying unit 83, and verification key storing unit 84.

The broadcast receiving unit 71 receives broadcast data via broadcast wave W from the broadcast transmitting apparatus 1. Concretely, the broadcast receiving unit 71 receives broadcast data from the broadcast transmitting apparatus 1, demodulates the broadcast data, and performs error correction and decoding such as TMCC (Transmission and Multiplexing Configuration Control) decoding and the like. Then, the broadcast receiving unit 71 outputs this as a TS (Transport Stream) of MPEG-2 to the broadcast signal analysis unit 72, as shown in FIG. 4.

The broadcast signal analysis unit 72 analyzes the broadcast signals of digital broadcast. Concretely, the broadcast signal analysis unit 72 separates a TS, in which video, audio, and data are multiplexed, into PES (Packetized Elementary Stream) data and section data. Then, the broadcast signal analysis unit 72, as shown in FIG. 4, outputs the PES data to the video/audio decoding unit 73, and outputs the section data to the data broadcast decoding unit 74. The broadcast signal analysis unit 72 is provided with an application activation information extracting part 721, as shown in FIG. 4.

The application activation information extracting part (unit) 721 extracts the above-described application activation information from the TS having been input from the broadcast receiving unit 71. Concretely, as shown in FIG. 4, the application activation information extracting part 721 confirms whether or not application activation information is described in the p/f area of EIT included in the TS having been input from the broadcast receiving unit 71, and extracts the content of the application activation information if the content is described. Then, the application activation information extracting part 721 outputs the extracted application activation information to the application controlling unit 75, as shown in FIG. 4.

The video/audio decoding unit 73 decodes the video/audio received and demodulated by the broadcast receiving unit 71. For example, in case that the video/audio is encoded by a MPEG-2 encoding scheme, the video/audio decoding unit 73 performs MPEG-2 decoding, and as shown in FIG. 4, outputs the video/audio to the composing and displaying unit 80 as video/audio data in a displayable output format.

The data broadcast decoding unit 74 decodes the data (data file) received and demodulated by the broadcast receiving unit 71 Herein, a data file broadcasted as a data broadcast in Japan is described in BML, which is a markup language. In this situation, the data broadcast decoding unit 74 concretely functions as a BML analyzing unit for analyzing BML, and outputs data (data broadcast data) converted from BML into a displayable output format to the composing and displaying unit 80, as shown in FIG. 4. The data broadcast decoding unit 74 is provided with a revocation list extracting part 741 and a verification key extracting part 742, as shown in FIG. 4.

The revocation list extracting part (unit) 741 extracts a revocation list from data transmitted by a DSM-CC data carousel. The revocation list extracting part 741 concretely, as shown in FIG. 4, extracts the revocation list stored in a predetermined module of the DSM-CC data carousel, and outputs the revocation list to the revocation list storing unit 82.

The verification key extracting part (unit) 742 extracts a verification key from the data transmitted by the DSM-CC data carousel. The verification key extracting part 742 concretely, as shown in FIG. 4, extracts the verification key stored in a predetermined module of the DSM-CC data carousel, and outputs the verification key to the verification key storing unit 84.

The application controlling unit 75 controls the application activation state of an application executed by the integrated broadcasting communications receiver 7. The application controlling unit 75 concretely, as shown in FIG. 4, refers to an application ID described in the application activation information extracted by the application activation information extracting part 721 and the address of the application server 5 or 6 in which this application is stored, and instructs the application obtaining unit 76 to obtain the application from the application server 5 or 6.

As shown in FIG. 4, when the application obtaining unit 76 has obtained the target application from the application 5, 6, the application controlling unit 75 refers to a control code described in the application activation information and instructs the application execution unit 79 to make the application into the activation state described in the control code. In such a manner, the application controlling unit 75 issues instructions to obtain and control the application to be executed by the integrated broadcasting communications receiver 7, according to the content of the application activation information.

Incidentally, if the application with the application ID described in the application activation information extracted by the application activation information extracting part 721 is already stored in the application storing unit 78, the application controlling unit 75 instructs the application execution unit 79 to make the application into the application activation state described in the above-described control code, without instructing the application obtaining unit 76 to obtain the application from the application server 5, 6.

Herein, the application controlling unit 75 also issues an instruction for application authentication. That is, when the application is executed by the application execution unit 79, the application controlling unit 75, as shown in FIG. 4, instructs the revocation list verifying unit 81 to verify whether or not the provider ID of the application is described in the revocation list.

Then, as described later, if a verification result that "The provider ID is not described in the revocation list." is output by the revocation list verifying unit 81, and a verification result notifying that a signature added to the application is valid (The application is an A application.) is input from the signature verifying unit 83, then the application controlling unit 75 confirms whether or not this application needs a resource managed by the broadcast station. Then, if the application needs a resource, the application controlling unit 75 outputs a resource requesting instruction and the provider ID of this application to resource managing unit 85. On the other hand, if this application does not need a resource, the application controlling unit 75 controls the application activation state of the application, according to the application activation information.

Then, the application controlling unit 75 permits the application execution unit 79 to allocate the resource. Thus, the application execution unit 79 executes the application, using this resource.

The application obtaining unit 76 obtains applications from the application server 5, 6. Concretely, as shown in FIG. 4, according to instructions from the application controlling unit 75, the application obtaining unit 76 respectively obtains an A application (application with a signature) from the application server 5 and a general application (application without a signature) from the application server 6, via the communication transmitting/receiving unit 77 and the communication line N. Incidentally, as described above, as an instruction from the application controlling unit 75 includes an application ID of an application as a control object and the address of the application server 5, 6 in which the application is stored, the application obtaining unit 76 can obtain a target application, according to an instruction from the application controlling unit 75.

When the application obtaining unit 76, as shown in FIG. 4, has obtained an application from the application server 5, 6, the application obtaining unit 76 outputs the application to the application storing unit 78. Herein, in case that the integrated broadcasting communications receiver 7 executes an application on-the-fly without once storing the application, the application obtaining unit 76 can also output the application directly to the application execution unit 79.

Incidentally, a case that the integrated broadcasting communications receiver 7 once stores an application and then executes the application can be a case, for example, that an obtained application is used in a news program that is broadcast at the same hour every day, in other words, the same application is repeatedly and periodically used. On the other hand, a case that the integrated broadcasting communications receiver 7 executes an application on-the-fly is possibly a case, for example, that an obtained application is used in a special program broadcasted only once, or that the same application is used only once.

Further, though not shown, when the application obtaining unit 76 has obtained an application, the application controlling unit 75 can also issue a verification instruction to the revocation list verifying unit 81 to verify whether or not the provider ID of this application is described in the revocation list. That is, the integrated broadcasting communications receiver 7 can perform application authentication not only when the application is activated but also when the application has been obtained.

The communication transmitting/receiving unit 77 performs data communication via the communication line N, as shown in FIG. 4. The communication transmitting/receiving unit 77 performs transmitting/receiving of data, according to TCP/IP communication protocol.

The application storing unit 78 stores applications (applications-A and general applications). As shown in FIG. 4, an application obtained by the application obtaining unit 76 is input to the application storing unit 78, and the application storing unit 78 is configured to be able to output the application to the application execution unit 79. Further, as described later, in application authentication, the application storing unit 78 outputs the provider ID of an application that becomes an object of authentication, according to an instruction from the revocation list verifying unit 81, and outputs a signature of an application to be an object of authentication, according to an instruction from the signature verifying unit 83. Incidentally, the application storing unit 78 is concretely embodied as a memory, a hard disk, or the like that is capable of storing data.

The application execution unit 79 executes applications. Concretely, as shown in FIG. 4, the application execution unit 79 executes an application obtained by the application obtaining unit 76, according to an instruction from the application controlling unit 75. When an application obtained by the application obtaining unit 76 is an A application, and the application needs a resource of the broadcast station, the application execution unit 79 executes the application, using the resource obtained via the resource managing unit 85 from the resource managing device 2 (see FIG. 2) of the broadcast station. Further, when an application obtained by the application obtaining unit 76 is a general application, the application execution unit 79 executes the application, without using a resource of the broadcast station. Then, as shown in FIG. 1, the application execution unit 79 outputs drawing data and audio data (for example, data of sound effect or the like in execution of application) of an executed application to the composing and displaying unit 80.

The composing and displaying unit 80 composes video/audio, data, and application. Concretely, as shown in FIG. 4, the composing and displaying unit 80 composes video/audio data that are input from the video/audio decoding unit 73, data broadcast data that is input from the data broadcast decoding unit 74, and drawing data and audio data that are input from the application execution unit 79, and respectively outputs them to a monitor Mo and a speaker Sp. Herein, the composing and displaying unit 80 can be embodied as a general GDC (Graphic Display Controller).

The revocation list verifying unit 81 verifies whether or not a provider ID added to an application is valid, referring to a revocation list. That is, as shown in FIG. 4, when a verification instruction is input from the application controlling unit 75 in executing an application, the revocation list verifying unit 81 reads out a revocation list from the revocation list storing unit 82 and also reads out the provider ID of the application that becomes an object of execution from the application storing unit 78. Then, the revocation list verifying unit 81 verifies whether or not this provider ID is described in the revocation list, and outputs a verification result to the signature verifying unit 83, as shown in FIG. 4.

Incidentally, as described above, the revocation list verifying unit 81 can also perform verification when the application is obtained, according to a verification instruction having been input from the application controlling unit 75. In this case, if a verification instruction is input from the application controlling unit 75 when an application is obtained, the revocation list verifying unit 81 reads out a revocation list from the revocation list storing unit 82 and also reads out the provider ID of the obtained application from the application storing unit 78. Then, the revocation list verifying unit 81 verifies whether or not this provider ID is described in the revocation list, and outputs a verification result to the signature verifying unit 83, as shown in FIG. 4.

The signature verifying unit 83 verifies a signature added to an application, using a verification key stored in the verification key storing unit 84. If a verification result that the provider ID of an application to be the object of execution (or an obtained application) is not described in the revocation list is input from the revocation list verifying unit 81, as shown in FIG. 4, the signature verifying unit 83 reads out a verification key from the verification key storing unit 84, performs verification of the signature, using the verification key, and outputs a verification result to the application controlling unit 75.

An application of which signature has been determined by the signature verifying unit 83 to be valid is an A application. On the other hand, an application, on which it has been determined that a signature added to the application is not valid or to which a signature itself is not added, is a general application. Accordingly, by being provided with the signature verifying unit 83, the integrated broadcasting communications receiver 7 can determine whether an application obtained by the application obtaining unit 76 is an application- or a general application.

The resource managing unit 85 obtains a resource from the broadcast station and allocates the resource to the application execution unit 79. As shown in FIG. 4, when an application needs a resource managed by the broadcast station, an instruction to request a resource and a provider ID corresponding to the application are input from the application controlling unit 75 to the resource managing unit 85. Then, as shown in FIG. 4, the resource managing unit 85 outputs a resource request and the provider ID corresponding to the application, to the resource managing device 2 in the broadcast station via the communication transmitting/receiving unit 77 and the communication line N.

Then, if the revocation list determining unit 22 (see FIG. 2) of the resource managing device 2 has determined that the provider ID having been input to the resource managing device 2 is not described in the revocation list, the resource output unit 23 (see FIG. 2) outputs the resource to the resource managing unit 85, as shown in FIG. 4. The resource managing unit 85 allocates the thus obtained resource to the application execution unit 79. In such a manner, in the integrated broadcasting communications system S1, when the integrated broadcasting communications receiver 7 accesses a resource managed by the broadcast station, the integrated broadcasting communications receiver 7 transmits a provider ID corresponding to an application executed by the integrated broadcasting communications receiver 7. Thus, the provider ID can be checked with a revocation list held by the broadcast station so that access control can be performed.

Incidentally, the revocation list generated by the signing key generating device 4 in the broadcast station is stored in a predetermined module of a DSM-CC data carousel, as described above, and is transmitted to the integrated broadcasting communications receiver 7 with a constant cycle. Accordingly, a case is also possible that the provider ID of an application that is intended to be revoked is described only in a revocation list held by the broadcast station side and is not described in a revocation list held by the integrated broadcasting communications receiver 7 side. In this case, as the application cannot be revoked on the side of the integrated broadcasting communications receiver 7, it may occur that the integrated broadcasting communications receiver 7 makes a request to the broadcast station for a resource that this application uses. However, as a revocation list held by the broadcast station side is always updated, even when the integrated broadcasting communications receiver 7 requests a resource, it is possible to prohibit an access to this resource.

By the integrated broadcasting communications receiver 7 with the above-described configuration, as it is possible by the revocation list verifying unit 81 to verify whether or not a provider ID corresponding to an application is described, it is possible, for example, to arbitrarily revoke an application that performs fraudulent operation. Further, on the integrated broadcasting communications receiver 7, by verifying the signatures of applications by the signature verifying unit 83, it is possible to determine applications (general applications) for which operation in the integrated broadcasting communications system S1 is not guaranteed. Thus, it is possible to restrict such an application from accessing a resource managed by the broadcast station.

### [Operation of Integrated Broadcasting Communications Receiver]

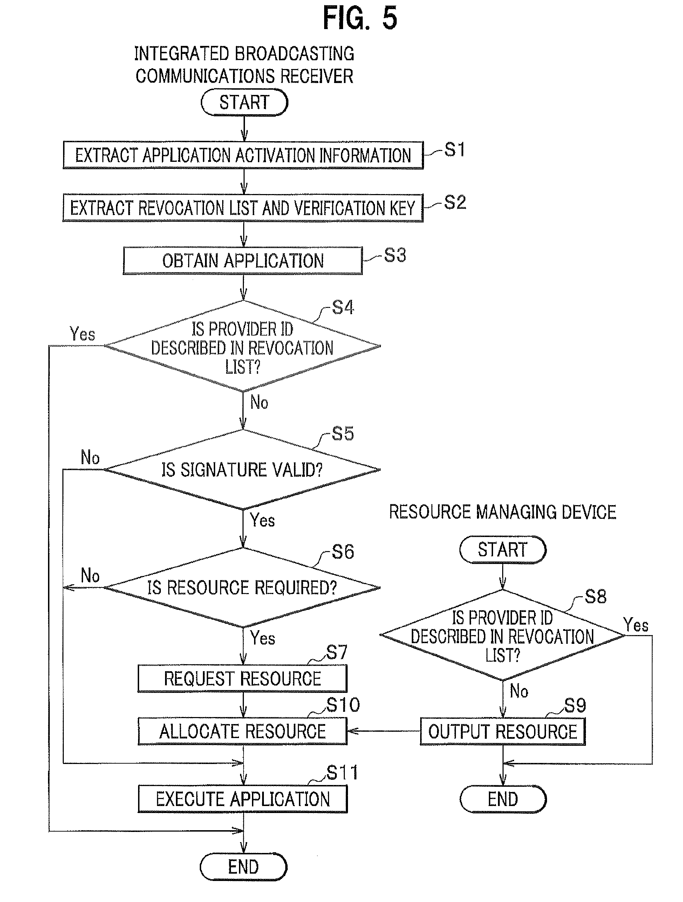

In the following, the operation of the integrated broadcasting communications receiver 7 according to the present embodiment will be briefly described, referring to FIG. 5 (also referring to FIGS, 1 to 4, as appropriate). Incidentally, the following description will be focused on processes related to application authentication and resource allocation on the integrated broadcasting communications receiver 7, and description of other processes will be omitted.

First, upon reception of broadcast wave W from the broadcast receiving unit 71, the integrated broadcasting communications receiver 7 extracts application activation information from the p/f area of EIT by the application activation information extracting part 721 (step S1). Then, the integrated broadcasting communications receiver 7 extracts a revocation list by the revocation list extracting part 741 from data transmitted by a DSM-CC data carousel, and extracts a verification key by the verification key extracting part 742 (step S2).

Then, the integrated broadcasting communications receiver 7 refers to the application activation information by the application controlling unit 75, and obtains an application from the application server 5 or the application server 6 by the application obtaining unit 76, according to an instruction from the application controlling unit 75 (step S3). Then, the integrated broadcasting communications receiver 7 verifies whether or not the provider ID of the obtained application is described in the revocation list by the revocation list verifying unit 81 (step S4). Then, if the provider ID is not described in the revocation list (No in step S4), the integrated broadcasting communications receiver 7 proceeds to step S5. On the other hand, if the provider ID is described in the revocation list (Yes in step S4), the integrated broadcasting communications receiver 7 terminates the process (does not execute the application).

Then, the integrated broadcasting communications receiver 7 verifies by the signature verifying unit 83 whether or not a signature is added to the application, and whether or not this signature is valid (step S5) Then, if the signature is valid (Yes in step S5), the integrated broadcasting communications receiver 7 proceeds to step S6. On the other hand, if a signature is not added or if this signature is not valid (No in step S5), the integrated broadcasting communications receiver 7 executes an application (general application) by the application execution unit 79 without allocating a resource of the broadcast station (step S11).

Then, the integrated broadcasting communications receiver 7 confirms whether or not the obtained application needs a resource of the broadcast station, by the application controlling unit 75 (step S6). Then, if the application needs a resource of the broadcast station (Yes in step S6), the integrated broadcasting communications receiver 7 requests the resource from the resource managing device 2 in the broadcast station, by the resource managing unit 85 (step S7). On the other hand, if the application does not need a resource of the broadcast station (No in step S6), the integrated broadcasting communications receiver 7 executes the application (A application) by the application execution unit 79, without allocating a resource of the broadcast station (step S11).

Corresponding to the above-described process by the integrated broadcasting communications receiver 7, the resource managing device 2 verifies by the revocation list determining unit 22 whether or not the provider ID of the application obtained by the integrated broadcasting communications receiver 7 is described in the revocation list (step S8). Then, if the provider ID is not described in the revocation list (No in step S8), the resource managing device 2 outputs the resource to the integrated broadcasting communications receiver 7 by the resource output unit 23 (step S9). On the other hand, if the provider ID is described in the revocation list (Yes in step S8), the resource managing device 2 terminates the process (does not output the resource).

Corresponding to the above-described process by the resource managing device 2, the integrated broadcasting communications receiver 7 allocates the resource to the application execution unit 79 by the resource managing unit 85 (step S10), and executes the application (A application) by the application execution unit 79 (step S11).

By the integrated broadcasting communications receiver 7 that performs the above-described operation, as it is possible to verify by the revocation list verifying unit 81 whether or not a provider ID corresponding to an application is described, it is possible to arbitrarily revoke, for example, an application that performs fraudulent operation. Further, on the integrated broadcasting communications receiver 7, by verifying the signature of an application by the signature verifying unit 83, it is possible to determine an application (general application) of which operation in the integrated broadcasting communications system S1 is not guaranteed, and it is thus possible to restrict this application from accessing a resource managed by the broadcast station.

An embodiment according to the present invention has been concretely described above, however, the spirit of the invention is not limited thereto and should be understood broadly based on descriptions in the claims.
Further, it is needless to say that various changes, modifications, and the like based on these descriptions are included in the spirit of the invention.

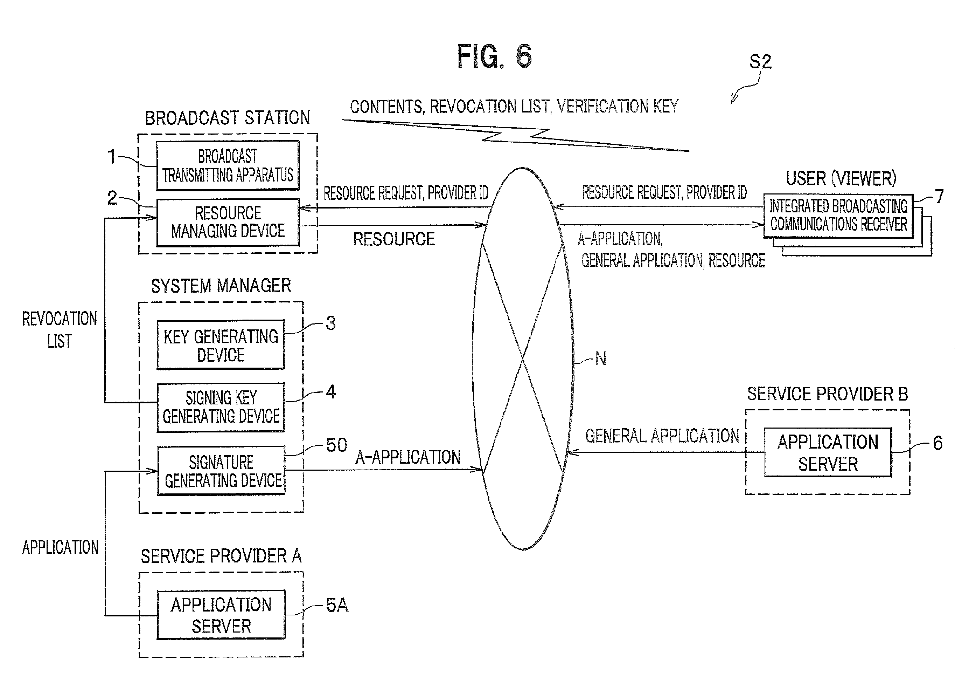

For example, in the above-described integrated broadcasting communications system S1, a signing key is generated in the broadcast station, and a signature is added to an application on the application server 5 of the service provider A, however, as shown in FIG. 6, a system manager, which is a third party, may be arranged so that the system manager generates a signing key and adds a signature. That is, an integrated broadcasting communications system S2 is configured such that, as shown in FIG. 6, only a broadcast transmitting apparatus 1 and a resource managing device 2 are provided in the broadcast station, wherein a key generating device 3, a signing key generating device 4, and a signature generating device 50 are provided in a newly arranged system manager. Incidentally, as the respective configurations in FIG. 6 are similar to those in the above-described integrated broadcasting communications system S1, description of them will be omitted.

For the integrated broadcasting communications system S2 with such configuration, it is not necessary to provide signature generating devices 50 for the respective application servers 5 of service providers A, and application authentication can be performed integrally under control by the system manager.

Further, in the above-described integrated broadcasting communications system S1, a revocation list and a verification key are stored in a predetermined module of a DSM-CC data carousel and transmitted to the integrated broadcasting communications receiver 7 by the broadcast transmitting apparatus 1, however, arrangement may be made such that a revocation list and a verification key are stored in a server installed at a certain site, and only the address of the server is transmitted to the integrated broadcasting communications receiver 7 by the broadcast transmitting apparatus 1. In this case, similarly to the case of application activation information, for example, the broadcast transmitting apparatus 1 describes, in the p/f area of EIT, the address of a server in which the revocation list and the verification key are stored, and transmits the address to the integrated broadcasting communications receiver 7. Then, the integrated broadcasting communications receiver 7 obtains the revocation list and the verification key from the server at the address extracted from the p/f area of EIT.

Further, in the above-described integrated broadcasting communications system S1, a revocation list and a verification key are stored in a predetermined module of a DSM-CC data carousel by the broadcast transmitting apparatus 1 and thus transmitted to the integrated broadcasting communications receiver 7, however, information of the revocation list and the verification key may be described in application activation information and thus transmitted to the integrated broadcasting communications receiver 7.
In this case, for example, the broadcast transmitting apparatus 1 describes, in the p/f area of EIT, information of the revocation list and the verification key similarly to the application activation information, and transmits the information to the integrated broadcasting communications receiver 7. Then, the integrated broadcasting communications receiver 7 extracts the revocation list and the verification key from the p/f area of EIT.

Further, in the above-described integrated broadcasting communications system S1, a verification key is stored in a predetermined module of a DSM-CC data carousel by the broadcast transmitting apparatus 1 and thus transmitted to the integrated broadcasting communications receiver 7, however, the verification key may be transmitted to the integrated broadcasting communications receiver 7 together with an A application (application with a signature). In this case, the key generating device 3 in the broadcast station delivers the generated verification key to the application server 5 off-line, and the application server 5 transmits the A application and the verification key to the integrated broadcasting communications receiver 7.

Further, in the above-described integrated broadcasting communications system S1, application activation information is described in the p/f area of EIT and thus transmitted to the integrated broadcasting communications receiver 7, however, application activation information may be stored in a predetermined module of a DSM-CC data carousel, and thus transmitted to the integrated broadcasting communications receiver 7.

Incidentally, the above-described broadcast transmitting apparatus 1, the resource managing device 2, the key generating device 3, the signing key generating device 4, the application server 5, the application server 6, and the integrated broadcasting communications receiver 7 respectively use a CPU (Central Processing Unit), a ROM (Read Only Memory), a RAM (Random Access Memory), a HDD (Hard Disk Drive), a communication interface, and the like (not shown) such that each CPU loads a program stored in the HDD or the like onto the RAM, and later-described various functions are thereby implemented. That is, the broadcast transmitting apparatus 1, the resource managing device 2, the key generating device 3, the signing key generating device 4, the application server 5, the application server 6, and the integrated broadcasting communications receiver 7 can operate respective computers by programs to make the computers function as the above-described respective units.
In this case, arrangement can be made such that each of the programs is recorded in a computer-readable recording medium, the program recorded in the recording medium is read and executed by a computer system, and thereby the program functions.

Incidentally, "a computer system" is assumed herein to include an OS and hardware such as peripheral devices. Further, a multi-task OS may be adopted as this OS so that respective functions are operated in parallel. Further, herein, "a computer-readable recording medium" refers to a portable medium such as a flexible disk, a photo magnetic disk, a ROM, or a CD-ROM, or a storage device such as a hard disk incorporated in a computer system.

Further, herein, "a computer-readable recording medium" may include one that dynamically holds a program for a short time, such as a communication line in a case of transmitting a program via a network, Internet for example, a telephone communication line or the like, and one that holds a program for a certain time, such as a volatile memory in a computer system being a server or a client in this case. Still further, such a program may be one for implementing a part of the above-described functions, and may be one that can implement the above-described functions by a combination with a program that is already recorded in a computer system.Description of Reference Symbols

- 1:: broadcast transmitting apparatus
- 2:: resource managing device (resource providing device)
- 3:: key generating device
- 4:: signing key generating device
- 5, 5A, 6:: application server
- 7:: integrated broadcasting communications receiver
- 21:: resource storing unit
- 22:: revocation list determining unit
- 23:: resource output unit
- 31:: key generating unit
- 32:: verification key managing unit
- 33:: master key managing unit
- 41:: parameter input unit
- 42:: signing key generating unit
- 43:: signing key managing unit
- 44:: signing key output unit
- 45:: revocation list generating unit
- 50:: signature generating device
- 51:: signing key input unit
- 52:: application input unit
- 53:: signature adding unit
- 54:: application transmitting unit
- 71:: broadcast receiving unit
- 72:: broadcast signal analysis unit
- 73:: video/audio decoding unit
- 74:: data broadcast decoding unit
- 75:: application controlling unit
- 76:: application obtaining unit
- 77:: communication transmitting/receiving unit
- 78:: application storing unit
- 79:: application execution unit
- 80:: composing and displaying unit
- 81:: revocation list verifying unit
- 82:: revocation list storing unit
- 83:: signature verifying unit
- 84:: verification key storing unit
- 85:: resource managing unit
- 721:: application activation information extracting part (application activation information extracting unit)
- 741:: revocation list extracting part (revocation list extracting unit)
- 742:: verification key extracting part (verification key extracting unit)
- N:: communication line
- S1, S2:: integrated broadcasting communications system
- SP:: speaker
- Mo:: monitor
- W:: broadcast wave

## Claims

1. An integrated broadcasting communications receiver used for an integrated broadcasting communications system including: a key generating device for generating a verification key that is public information for verifying a signature added to an application of a corresponding individual service provider; a signing key generating device for generating a signing key that is unique to the service provider, and generating a revocation list in which a provider ID of a service provider corresponding to a revoked signing key is described; an application server that adds a signature to an application by a signing key and delivers the application to an integrated broadcasting communications receiver; a resource managing device for managing a resource that the application uses during execution; and a broadcast transmitting apparatus for transmitting broadcast data via a broadcast wave to the integrated broadcasting communications receiver, the integrated broadcasting communications receiver comprising:
an application activation information extracting unit for extracting application activation information for obtaining and controlling the application, from an event information table included in a transport stream of the broadcast data transmitted by the broadcast transmitting apparatus;
an application obtaining unit for obtaining the application, referring to an address of an application server described in the application activation information, from the application server;
an application execution unit for executing the application;
an application controlling unit for controlling an activation state of the application executed by the application execution unit, according to a control code described in the application activation information;
a revocation list extracting unit for extracting the revocation list from a predetermined module of a DSM-CC data carousel transmitted by the broadcast transmitting apparatus;
a verification key extracting unit for extracting the verification key from the predetermined module of the DSM-CC data carousel transmitted by the broadcast transmitting apparatus;
a revocation list verifying unit for verifying whether or not the provider ID of the service provider who provides the application obtained by the application obtaining unit is described in the revocation list;
a signature verifying unit for verifying whether or not a signature is added to the application with the provider ID having been determined by the revocation list verifying unit to be not described in the revocation list, and verifying whether or not the signature is valid; and
a resource managing unit for obtaining the resource from the resource managing device when the application whose signature has been determined to be valid by the signature verifying unit needs the resource, and allocating the resource to the application execution unit.

2. A resource managing device used for an integrated broadcasting communications system including: a key generating device for generating a verification key that is public information for verifying a signature added to an application of a corresponding individual service provider; a signing key generating device for generating a signing key that is unique to the service provider, and generating a revocation list in which a provider ID of a service provider corresponding to a revoked signing key is described; an application server that adds a signature to an application by a signing key and delivers the application to an integrated broadcasting communications receiver; a resource managing device for managing a resource that the application uses during execution; and a broadcast transmitting apparatus for transmitting broadcast data via a broadcast wave to the integrated broadcasting communications receiver, the resource managing device comprising:
a resource storing unit for storing the resource;
a revocation list determining unit for determining whether or not a provider ID of a service provider who provides the application that requires the resource is described in the revocation list; and
a resource output unit for outputting the resource to the integrated broadcasting communications receiver that executes the application having the provider ID in case that the revocation list determining unit has determined that the provider ID is not described in the revocation list.
